# EUROPÄISCHE PATENTSCHRIFT

(11) **EP 3 844 579 B1**
(45) Veröffentlichungstag und Bekanntmachung des Hinweises auf die Patenterteilung: **17.07.2024**
(21) Anmeldenummer: 19728345.0
(22) Anmeldetag: 24.05.2019
(51) Int. Cl.: G05B 19/4069, G06F 30/00, G06F 30/23, G06F 111/08, G06F 113/24

(54) **VERFAHREN, VORRICHTUNG UND SYSTEM ZUR ERMITTLUNG VON MESSINFORMATIONEN**
METHOD, DEVICE AND SYSTEM FOR DETERMINING MEASUREMENT INFORMATION
PROCÉDÉ, DISPOSITIF ET SYSTÈME POUR DÉTERMINER DES INFORMATIONS DE MESURE

(30) Priorität: 30.08.2018 DE 102018121198
(43) Veröffentlichungstag der Anmeldung: 07.07.2021
(73) Patentinhaber: ThyssenKrupp Steel Europe AG, 47166 Duisburg (DE); thyssenkrupp AG, 45143 Essen (DE)
(72) Erfinder: KESSLER, Lutz, 44227 Dortmund (DE); GERLACH, Jörg, 47199 Duisburg (DE); EIDEN, Stefan, Düsseldorf 40489 (DE)
(74) Vertreter: ThyssenKrupp Steel Europe AG
(86) Internationale Anmeldenummer: PCT/EP2019/063518
(87) Internationale Veröffentlichungsnummer: WO 2020/043335

(56) Entgegenhaltungen:
- EP-A1- 2 463 792
- DE-A1- 102016 105 871
- DE-A1- 102016 108 163
- JP-A- 2003 036 277

## Beschreibung

Die Erfindung betrifft ein Verfahren zur Ermittlung von Messinformationen für eine durchzuführende Umformung eines Metallteils, insbesondere für die Stahl- oder Aluminiumumformung, das Verfahren durchgeführt durch zumindest eine erste und/oder eine zweite Vorrichtung. Die Erfindung betrifft weiter eine Vorrichtung, welche dazu eingerichtet ist oder entsprechende Mittel umfasst, ein erfindungsgemäßes Verfahren durchzuführen und/oder zu steuern sowie ein System von Vorrichtungen.

Zur Erhöhung der Effizienz bei der Umformung von Metallteilen, beispielsweise von Stahl- oder Aluminiumteilen und zur Unterstützung der Materialauswahl ist es denkbar, die Umformprozesse im laufenden Betrieb zu überwachen und die eingesetzten Werkzeuge zu regeln. Dabei könnten mittels geeigneter Sensoren Messwerte während des Umformprozesses genommen werden und der Umformprozess entsprechend der Messwerte geregelt werden. Sind die eingesetzten Umformwerkzeuge entsprechend reaktiv ausgestaltet, kann der Umformprozess unter Berücksichtigung der Messwerte derart geregelt werden, dass beispielsweise die Entstehung von fehlerhaften Metallteilen und somit Ausschuss verringert oder vermieden werden kann.

Ein Verfahren zur Simulation von Umformprozessen ist beispielhaft in der EP 2 463 792 A1 beschrieben.

Problematisch bei einer solchen Prozessregelung oder -steuerung ist jedoch, dass sich werkzeugbauart- und prozessbedingt nicht alle relevanten Messgrößen an allen infrage kommenden Positionen des umzuformenden Metallteils während des Umformprozesses überwachen lassen. Sind beispielsweise zu viele Sensoren vorgesehen, kann die Funktionsfähigkeit eines Werkzeugs drastisch vermindert werden. Eine optische Analyse auf Risse kann beispielsweise im geschlossenen Werkzeug nicht durchgeführt werden. Auch eignet sich nicht jeder Sensor oder jedes Messverfahren zur Implementation in einen Umformprozess, sodass prinzipiell schon nicht alle relevanten Messgrößen überwacht werden können. Beispielsweise kann das Rest-Umformvermögen (das heißt die Möglichkeit zur plastischen Formänderung, die ein Werkstoff ohne Rissbildung ertragen kann, wie zum Beispiel die Bruchdehnung A80, die Streckgrenze Rp0,2 und/oder Zugfestigkeit Rm) nicht bzw. nur eingeschränkt während eines laufenden Umformprozesses gemessen werden. Es müssen daher im Vorfeld einer Umformung geeignete Messinformationen bestimmt werden, die es erlauben zielgerichtet durch Messung einzelner, möglichst weniger Messgrößen an bestimmten, möglichst wenigen Positionen den Umformprozess möglichst umfassend zu überwachen und Abweichungen am umgeformten Metallteil von den zu erreichenden Zielgrößen zuverlässig und so frühzeitig zu erkennen, dass der weitere Umformprozess so gesteuert werden kann, dass im fertig umgeformten Metallteil die Zielgrößen möglichst eingehalten werden. Die Ermittlung geeigneter Messinformationen ist jedoch problematisch und insbesondere durch Experimente kaum praktikabel umsetzbar.

Der vorliegenden Erfindung liegt die Aufgabe zugrunde, ein Verfahren anzugeben, mit dem eine durchzuführende Umformung effizient geregelt werden kann, sodass die Entstehung von fehlerhaften Metallteilen bzw. Ausschuss verringert oder weitestgehend vermieden wird. Zudem sollen eine Vorrichtung und ein System zur Lösung der Aufgabe vorgeschlagen werden.

Gemäß einer ersten Lehre wird die oben genannte Aufgabe mit einem Verfahren zur Ermittlung von Messinformationen für eine durchzuführende Umformung eines Metallteils, insbesondere für die Stahl- oder Aluminiumumformung gelöst, wobei das Verfahren folgendes umfasst: Erhalten von Umformrandbedingungen der durchzuführenden Umformung von einer ersten Vorrichtung an der zweiten Vorrichtung; Erhalten und/oder Ermitteln von Materialparametern des Metallteils und/oder Prozessparametern der durchzuführenden Umformung; Durchführen und/oder Auslösen des Durchführens mindestens einer Umformsimulation basierend auf den Umformrandbedingungen und den Materialparametern und/oder Prozessparametern; Ermitteln von Messinformationen zumindest teilweise basierend auf der mindestens einen Umformsimulation; und Bereitstellen der Messinformationen von der zweiten Vorrichtung an die erste Vorrichtung.

Dadurch, dass Messinformationen zumindest teilweise basierend auf der mindestens einen Umformsimulation ermittelt werden, können diese effizient ohne aufwändige Experimente bestimmt werden. Messinformationen können beispielsweise die Position und/oder Art einer notwendigen Messung sein. Basierend auf diesen Messinformationen kann dann ein Regel- oder Steuerkreis für eine durchzuführende Umformung verwirklicht werden. Neben der Vermeidung von aufwendigen experimentellen Vorversuchen können mit Umformsimulationen auch optimale Prozessparameter ermittelt sowie eine Machbarkeit des Umformprozesses beurteilt werden. Entsprechende Umformsimulationen basieren zumeist auf einer Finite-Elemente-Methode (FEM).

Zur Durchführung der Umformsimulationen werden üblicherweise bestimmte Materialparameter angenommen, welche charakteristisch für Umformeigenschaften der zu verwendenden Materialien sind und beispielsweise experimentellen Ergebnissen wie Zugversuchen entnommen werden. Beispielsweise werden typische mechanische Kennwerte, etwa Mittelwerte oder Werte von einzelnen experimentellen Ergebnissen verwendet. Die Umformsimulationen werden dann auf Grundlage solcher konstanter Materialparameter und vorgegebenen Umformrandbedingungen durchgeführt.

Beispielsweise verfügt ein Abnehmer zu produzierender Halbzeuge in der Regel nicht über alle notwendigen Parameter und Randbedingungen, um eine Umformsimulation mit der notwendigen Genauigkeit durchführen zu können. So sind dem Abnehmer zwar die zu erreichenden Zielgrößen und die Umformrandbedingen in der Regel bekannt, jedoch stehen ihm regelmäßig nur einzelne Kennwerte der Materialparameter zur Verfügung. Auch sind einem Abnehmer zwar möglicherweise Anforderungen an Prozessparameter bekannt. Insbesondere tatsächlich vorliegende Prozessparameter stehen ihm in der Regel nicht oder nicht mit der notwendigen Genauigkeit zur Verfügung. Eine für eine umfassende Simulation der Umformung hinreichend genaue Kenntnis der Parameter, um verlässliche Messinformationen zu erlangen, kann den Abnehmern daher nicht ohne Weiteres zugänglich sein.

Den Herstellern der Halbzeuge bzw. der Grundmaterialien können wiederum zwar eine Vielzahl von Materialparametern und Prozessparametern bekannt sein, jedoch sind solche Informationen möglicherweise geheimhaltungsbedürftig und unterliegen auch wiederum starken Schwankungen, beispielsweise wenn Herstellungsverfahren mit der Zeit verändert oder erneuert werden. Somit sind die für die Umformsimulationen herangezogenen Material- und Prozessparameter seitens des Abnehmers ggf. schon nicht ausreichend für eine realistische Abschätzung der zu erwartenden Robustheit der Umformung, sodass sich keine Aussage treffen lässt, wie beispielsweise durch einen Regel- oder Steuerkreis basierend auf Messinformationen die Robustheit gesteigert werden kann. Demzufolge ist die Verwirklichung von Regel- oder Steuerkreisen, z.B. durch Einbau von Sensoren in die Umformwerkzeuge und eine mittels der Sensordaten induzierte Variation der Pressenkräfte, Variation der Niederhalterkräfte, Einstellung der Ziehdistanzen und/oder einer zusätzlichen Beölung für die Abnehmer nur eingeschränkt zu erreichen.

Daher sollen die Umformrandbedingungen der durchzuführenden Umformung von einer ersten Vorrichtung an der zweiten Vorrichtung, beispielsweise einem Computer eines Herstellers von Halbzeugen, erhalten werden. Erhält oder ermittelt nun die zweite Vorrichtung Materialparameter des Metallteils und/oder Prozessparameter der durchzuführenden Umformung, kann mindestens eine Umformsimulation durchgeführt oder ausgelöst werden basierend auf den Umformrandbedingungen und den Materialparametern und/oder Prozessparametern. Zumindest teilweise hierauf basierend können Messinformationen ermittelt und von der zweiten Vorrichtung an die erste Vorrichtung bereitgestellt werden.

Die Umformrandbedingungen werden beispielsweise von der zweiten Vorrichtung, z.B. über eine Eingangsschnittstelle erhalten. Hierbei können die Umformrandbedingungen von der ersten Vorrichtung bereitgestellt, weitergeleitet und/oder erzeugt worden sein, wobei die erste Vorrichtung mit der zweiten Vorrichtung kommuniziert. Die erste Vorrichtung kann eine andere Vorrichtung sein als die zweite Vorrichtung bzw. die erste Vorrichtung ist im Vergleich zur zweiten Vorrichtung eine externe Vorrichtung. Die erste und zweite Vorrichtung können räumlich getrennt sein, über getrennte Ressourcen verfügen und/oder nicht ständig in Kommunikation stehen. Beispielsweise ist die erste Vorrichtung einem Abnehmer von Halbzeugen zugeordnet und/oder die zweite Vorrichtung ist einem Hersteller von Halbzeugen und/oder einem (weiteren) Dienstleister mit Zugriff auf die Materialparameter zugeordnet.

Unter Umformrandbedingungen werden Bedingungen verstanden, welche zumindest teilweise die Durchführung einer Umformsimulation erlauben. Beispielsweise umfassen die Umformrandbedingungen geometrische Bedingungen wie Ausgangsgeometrie und/oder Zielgeometrie der Umformung, Information indikativ für eines oder mehrere Materialien für die Umformung, beispielsweise der Typ des Materials, beispielsweise eine Stahlsorte, etwa gemäß DIN EN 10027, oder eine Aluminiumsorte, etwa gemäß der DIN EN 573, oder eine Werkstoffnummer, eine chemische Zusammensetzung und/oder eine mechanische und/oder thermische Vorbehandlung, Material- und/oder Prozessparameter. Beispielsweise können Umformrandbedingungen in Form von CAD-Daten erhalten werden. Insbesondere wenn auf Grundlage der übermittelten Umformrandbedingungen eine Umformsimulation nicht oder nur teilweise durchgeführt werden könnte, kann in dem Verfahren vorgesehen sein, dass die zweite Vorrichtung die Ergänzung der Umformrandbedingungen z.B. von der ersten Vorrichtung abfragt und/oder eine Abfrage auslöst. Hierzu kann die zweite Vorrichtung eine Vorauswahl von möglichen Ergänzungen bereitstellen und beispielsweise eine Empfehlung der Ergänzungen erzeugen. Beispielsweise wird der Abnehmer von Halbzeugen an der ersten Vorrichtung aufgefordert, die Umformrandbedingungen zu ergänzen. Unter Umformrandbedingungen werden vorliegend insbesondere Informationen verstanden, welche typischerweise einem Abnehmer von Halbzeugen bzw. Grundmaterialien bekannt sind. Die Umformrandbedingungen liegen also insbesondere an der ersten Vorrichtung vor.

Hingegen beziehen sich die im Folgenden beschriebenen Material- und/oder Prozessparameter dagegen typischerweise auf Informationen, die nur dem Hersteller von Halbzeugen bzw. Grundmaterialien bekannt sind. Die Material- und/oder Prozessparameter liegen also insbesondere nicht an der ersten Vorrichtung vor, sondern beispielsweise lediglich an der zweiten Vorrichtung.

So können unter einem Materialparameter beispielsweise solche Parameter verstanden werden, welche geeignet sind, die Umformeigenschaften des Materials zu charakterisieren. Beispielsweise sind Materialparameter experimentell ermittelbar, beispielsweise durch Zugversuche und/oder hydraulische Tiefungsversuche, und/oder zumindest aus Experimenten ableitbar. Unter Materialparametern können auch Korrelationen zwischen weiteren Materialparametern und/oder experimentellen Daten verstanden werden. Beispielsweise sind Materialparameter indikativ für ein Spannungs-Dehnungs-Diagramm, Elastizitätsmodul, Poisson-Zahl, Dehngrenze, Streckgrenze, Zugfestigkeit, Gleichmaßdehnung, Verfestigungsexponent, Anisotropiekoeffizient, Reibungskoeffizient, Oberflächenrauheit, Bruchdehnung und/oder Brucheinschnürung eines Materials oder mehreren Materialien.

Unter einem Prozessparameter werden insbesondere Parameter indikativ für den durchgeführten Prozess verstanden. Beispielsweise sind Prozessparameter Geschwindigkeit, Temperatur, Druck, Kräfte, Distanzen, Position des Metallteils (Platine, Blechstück), Art und/oder Form der Umformwerkzeuge. Auch können beispielsweise Reibungsbedingungen, wie z.B. Art, Menge, Verteilung und/oder Aufbringung von Schmiermitteln wie Schmieröl als Prozessparameter verstanden werden.

Es wird nun mindestens eine Umformsimulation basierend auf den Umformrandbedingungen und den Materialparametern und/oder Prozessparametern durch die zweite Vorrichtung durchgeführt oder deren Durchführung ausgelöst. Beispielsweise ist eine dritte Vorrichtung vorgesehen oder ein System von dritten Vorrichtungen, welche zur Durchführung von Umformsimulationen eingerichtet sind.

Die dritte(n) Vorrichtung(en) steht bzw. stehen hierbei vorzugsweise nicht in direkter Kommunikation zur ersten Vorrichtung. Die Umformsimulationen können auf einer Finite-Elemente-Methode (FEM) und/oder statischen Methoden, wie zum Beispiel einer Monte-Carlo Methode (MC) und/oder einem Latin Hypercube Sampling basieren. Beispielsweise kann eine Umformsimulation auch nur auf mindestens einer dritten Vorrichtung ausgeführt werden, so dass die dritte Vorrichtung insbesondere die Aufgabe der zweiten Vorrichtung zumindest teilweise übernimmt und die zweite Vorrichtung die Berechnung durchführt.

Basierend auf der mindestens einen Umformsimulation werden nun Messinformationen ermittelt und an die erste Vorrichtung bereitgestellt. Messinformationen charakterisieren oder spezifizieren insbesondere (zumindest) einen Messvorgang, der während der durchzuführenden Umformung erfolgen soll, können also insbesondere eine Vorgabe darstellen, etwa hinsichtlich zumindest eines während der durchzuführenden Umformung durchzuführenden Messvorgangs. Die Messinformationen geben beispielsweise an, welche Messgrößen sinnvoll genutzt werden können ("Messgrößeninformationen") und/oder welche Sensorpositionen verwendet werden können ("Messpositionsinformationen") und/oder welche Art der Erfassung verwendet werden kann. So kann die Messinformation etwa angeben, welcher Sensortyp (etwa Einlaufsensor und/oder Drucksensor, z.B. ein Piezodruckmodul) zu verwenden ist und/oder welches Messverfahren (beispielsweise Messung welcher Kraft) zu verwenden ist. Auch können die Messinformationen einen prognostizierten Zeitpunkt angeben, zu dem eine bestimmte Messung zur erfolgen hat. Die Messinformationen spezifizieren oder charakterisieren dabei insbesondere (zumindest) einen Messvorgang, mit dem ermittelt werden kann, ob es bei dem fertig umgeformten Metallteil zu einer signifikanten Abweichung von den zu erreichenden Zielgrößen kommen könnte. Zielgrößen oder auch "Qualitätsgrößen" sind hierbei zu erzielende Eigenschaften des Metallteils nach der Umformung. Signifikant ist eine Abweichung, wenn sie die zulässigen Toleranzen überschreitet. Zielgrößen werden in der Regel vom Abnehmer herzustellender Halbzeuge vorgegeben und können daher insbesondere von den Umformrandbedingungen umfasst sein.

Insbesondere können basierend auf der mindestens einen Umformsimulation Umformergebnisse repräsentativ für das basierend auf der mindestens einen Umformsimulation prognostizierte Ergebnis der durchzuführenden Umformung ermittelt werden, insbesondere durch die zweite Vorrichtung. Basierend auf den Umformergebnissen können dann beispielsweise die Messinformationen ermittelt werden. Nach Bedarf können die Umformergebnisse an die erste Vorrichtung bereitgestellt werden. Umformergebnisse und Zielgrößen können sich insbesondere auf dieselben Eigenschaften eines umgeformten Metallteils beziehen. Umformergebnisse und Zielgrößen können beispielsweise zu erreichende Abmessungen oder auch zu erzielende Sicherheiten, insbesondere gegenüber Einschnürungen sein. Umformergebnisse und Zielgrößen können beispielsweise eine Dehnungsverteilung, beispielsweise eine zwei- oder dreidimensionale räumliche Dehnungsverteilung des Materials in einer Zielgeometrie umfassen. Beispielsweise wird die Dehnungsverteilung anhand der Geometrie gewichtet, d.h. als Zielgrößen bestimmte Teile der Zielgeometrie beispielsweise besonders bewertet. Umformergebnisse und Zielgrößen können auch einen Vergleich einer Dehnungsverteilung mit mindestens einer Grenzformänderungskurve (Forming Limit Curve - FLC) umfassen, beispielsweise eine Differenz zu Werten einer Grenzformänderungskurve.

Die erste Vorrichtung, welche beispielsweise einem Abnehmer von Halbzeugen zugeordnet ist, muss daher selbst keine Datenbank für Material- und/oder Prozessparameter führen und auch nicht die Kapazitäten bereitstellen, ggf. eine Reihe von Umformsimulationen für eine Vielzahl von verschiedenen Materialparametern durchzuführen. Andererseits kann sichergestellt werden, dass den Umformsimulationen stets aktuelle und herstellerspezifische Material- und/oder Prozessparameter zugrunde gelegt werden. Beispielsweise ist die zweite Vorrichtung einem Hersteller von Halbzeugen bzw. Grundmaterialien zugeordnet, wobei die Material- und/oder Prozessparameter auf einfache Weise aktuell gehalten werden können. Wenn beispielsweise Herstellungsverfahren mit der Zeit verändert oder erneuert werden und neue Versuchsergebnisse vorliegen, kann über das Verfahren sichergestellt werden, dass den Umformsimulationen nicht ungenaue oder unvollständige Material- und/oder Prozessparameter zugrunde gelegt werden. Entsprechend wird die Genauigkeit der Umformergebnisse und der Messinformationen verbessert.

Wie bereits ausgeführt, können die Umformrandbedingungen bereits Information indikativ für eines oder mehrere Materialien für die Umformung enthalten, so dass beispielsweise der Abnehmer die zu verwendende Stahl- oder Aluminiumsorte vorgibt. In einer Ausgestaltung wird die Information indikativ für eines oder mehrere Materialien für die Umformung zumindest teilweise anhand der Umformrandbedingungen z.B. durch die zweite bzw. dritte Vorrichtung ermittelt. Beispielsweise wird die Information indikativ für eines oder mehrere Materialien für die Umformung anhand der Umformrandbedingungen ermittelt, beispielsweise anhand einer Datenbank umfassend derartige Informationen. Insbesondere können auch Umformsimulationen durchgeführt werden und auf Basis von Umformergebnissen repräsentativ für das basierend auf der mindestens einen Umformsimulation prognostizierte Ergebnis der durchzuführenden Umformung eine geeignete Information indikativ für eines oder mehrere Materialien für die Umformung, beispielsweise eine geeignete Stahl- oder Aluminiumsorte ermittelt werden.

Wie ebenfalls bereits ausgeführt, können die Umformrandbedingungen bereits zumindest teilweise Prozessparameter enthalten. Beispielsweise kann ein Abnehmer vorgeben, welcher Prozess eingesetzt werden soll oder mit welcher Geschwindigkeit ein Prozess ablaufen soll. In einer Ausgestaltung werden die Prozessparameter zumindest teilweise anhand der Umformrandbedingungen z.B. durch die zweite bzw. dritte Vorrichtung ermittelt.

Erfindungsgemäß umfassen die Messinformationen Messgrößeninformationen indikativ für eine oder mehrere bei der durchzuführenden Umformung zu bestimmende Messgrößen und/oder Messpositionsinformationen indikativ für eine oder mehrere Positionen eines oder mehrerer bei der durchzuführenden Umformung zu verwendenden Sensoren. Wie bereits erläutert, können die Messinformationen etwa einen Sensortyp und/oder ein Messverfahren zur Messung einer zu bestimmenden Messgröße angeben.

In einer weiteren Ausgestaltung umfasst das Verfahren zudem ein Erhalten und/oder Ermitteln einer Verteilung von Materialparametern des Metallteils und/oder Prozessparametern der durchzuführenden Umformung, wobei das Durchführen und/oder Auslösen des Durchführens der mindestens einen Umformsimulation auf den Umformrandbedingungen und der Verteilung von Materialparametern und/oder Prozessparametern basiert.

Eine Verteilung von Materialparametern des Metallteils und/oder Prozessparametern der durchzuführenden Umformung wird ermittelt und/oder erhalten. Eine Verteilung von Materialparametern des Metallteils ist dabei charakteristisch für Schwankungen der Umformeigenschaften der umzuformenden Materialien. Beispielsweise ist eine Datenbank vorgesehen, welche für eine Vielzahl von Materialien eine Verteilung von Materialparametern enthält, wobei die Verteilung von Materialparameter aus der Datenbank insbesondere von der zweiten Vorrichtung abgefragt wird. Unter der Verteilung von Materialparametern kann ein Satz von Daten verstanden werden, welcher indikativ für die Schwankungen der Materialparameter des Metallteils ist. Beispielsweise handelt es sich um einen Satz von Daten aus einer Reihe von experimentellen Ergebnissen und/oder um statistische Kennwerte (arithmetisches Mittel, quadratisches Mittel, Erwartungswert, und/oder Varianz/Streuung, z.B. aus einer Reihe von experimentellen Ergebnissen).

Eine Verteilung von Prozessparametern der durchzuführenden Umformung ist beispielsweise charakteristisch für Schwankungen der Parameter der durchzuführenden Umformung. Beispielsweise ist eine Datenbank vorgesehen, welche für eine Vielzahl von Herstellungsverfahren eine Verteilung von Prozessparametern enthält, wobei die Verteilung von Prozessparametern aus der Datenbank insbesondere von der zweiten Vorrichtung abgefragt wird. Unter der Verteilung von Prozessparametern kann ein Satz von Daten verstanden werden, welcher indikativ für die Schwankungen der Prozessparameter ist. Beispielsweise handelt es sich um einen Satz von Daten aus einer Reihe von experimentellen Ergebnissen und/oder um statistische Kennwerte.

Die erste Vorrichtung ist insbesondere an der Ermittlung der Materialparameter des Metallteils und/oder Prozessparameter der durchzuführenden Umformung nicht beteiligt. Insbesondere können auch Schwankungen in den Bedingungen, beispielsweise in den Material- und/oder Prozessparameter in der ersten Vorrichtung und/oder in der zweiten Vorrichtung vorgegeben werden.

Die Berücksichtigung einer Verteilung von Material- und/oder Prozessparametern ermöglicht es, Wahrscheinlichkeiten anzugeben, mit denen Bedingungen im Herstellungsprozess entstehen, die zur Herstellung fehlerhafter Metallteile führen. Beispielsweise wird eine Verteilung von Umformergebnissen durch eine oder mehrere Umformsimulationen basierend auf Verteilung von Material- und/oder Prozessparametern bereitgestellt und diese insbesondere einer Auswertung bezüglich Zielgrößen unterzogen.

Es kann beispielsweise prognostiziert werden, welche Auswirkung eine leichte Form- oder Lageabweichung des umzuformenden Metallteils auf die Einhaltung der Zielgrößen des umgeformten Metallteils hat. Wird dann ein Sensor eingerichtet, der vor Beginn der Umformung die Form- oder Lageabweichung des umzuformenden Metallteils von einer gewünschten Ausgangsform bestimmt, kann abhängig von der prognostizierten Auswirkung der gemessen Form- oder Lageabweichung der Umformprozess automatisch derart modifiziert werden, dass es nicht zu einer Herstellung fehlerhafter Teile kommt. Es kann auch beispielsweise prognostiziert werden, welche Auswirkungen eine Abweichung einer Pressenkraft von einer eingestellten Pressenkraft auf die Einhaltung der Zielgrößen hat. Wird die Pressenkraft mittels eines Sensors überwacht, kann abhängig von der aus der Verteilung von Umformergebnissen prognostizierten Wahrscheinlichkeit, dass es zu einer Abweichung von den Zielgrößen kommen kann, beispielsweise die Pressenkraft erhöht oder vermindert werden. Auch kann beispielsweise eine Niederhalterkraft erhöht oder reduziert werden, um eine Regelung oder Steuerung des Umformprozesses zu erreichen.

In einer weiteren Ausgestaltung des erfindungsgemäßen Verfahrens werden basierend auf den Umformrandbedingungen und der Verteilung von Materialparametern und/oder Prozessparametern mehrere Umformsimulation durchgeführt und/oder das Durchführen hiervon ausgelöst.

Beispielsweise wird eine Reihe von Umformsimulationen auf Grundlage der Umformrandbedingungen durchgeführt, wobei die Materialparameter bzw. Prozessparameter innerhalb der Verteilung von Materialparametern bzw. Prozessparametern variiert werden. Hierdurch kann beispielsweise für jedes individuelle Herstellungsverfahren eine Verteilung von Umformergebnissen bereitgestellt werden, selbst dann wenn vorab keine Informationen über die Auswirkungen der Verteilung von Material- und/oder Prozessparametern auf das Erreichen der Zielgrößen bekannt sind.

In einer weiteren Ausgestaltung umfasst das Verfahren: Ermitteln von einer oder mehreren kritischen Stellen an einem Metallteil und/oder einer oder mehreren kritischen Zeitpunkten während der durchzuführenden Umformung, wobei das Ermitteln von Messinformationen zudem auf der einen oder den mehreren ermittelten kritischen Stellen und/oder der einen oder den mehreren kritischen Zeitpunkten basiert.

Unter einer kritischen Stelle wird beispielsweise eine Position oder ein Bereich auf bzw. an einem Metallteil angesehen, an der mit erhöhter Wahrscheinlichkeit Fehler während der Umformung auftreten, die zu Abweichungen von den Zielgrößen führen können. Beispielsweise können diese in empfindlichen oder stark umgeformten Bereichen eines Metallteils auftreten, beispielsweise an Kanten oder an dünnen Bereichen mit geringer Wandstärke. Diese kritischen Stellen können dann gezielt mittels geeigneter Sensoren überwacht werden, um den Umformprozess ggf. derart zu regeln, dass es nicht zu signifikanten Abweichungen von den Zielgrößen kommt.

Unter kritischen Zeitpunkten werden insbesondere Zeitpunkte während einer Umformung verstanden, zu denen Fehler auftreten, die zu Abweichungen von den Zielgrößen führen können. Die Kenntnis dieser Zeitpunkte ermöglicht beispielsweise die gezielte Überwachung und Regelung oder Steuerung des Umformprozesses. Beispielsweise genügt dann bei einem mehrstufigen Herstellungsprozess die Überwachung einer Pressenkraft lediglich in einer Stufe des Herstellungsprozesses, um den Herstellungsprozess derart regeln zu können, dass es nicht zu einer signifikanten Abweichung von den Zielgrößen kommt.

In einer weiteren Ausgestaltung umfassen die Umformrandbedingungen Zielgrößen der Umformung. Somit können beispielsweise die Zielgrößen von der ersten Vorrichtung bzw. einem Abnehmer, welchem die erste Vorrichtung zugeordnet ist, vorgegeben werden und die Umformergebnisse im Hinblick auf die Zielgrößen ausgewertet werden. Beispielsweise können Zielgrößen eine Rissgefahr, eine Gewichtung bestimmter Bereiche der Ausgangs- und/oder Zielgeometrie, Sicherheiten gegenüber Einschnürungen und/oder Bereiche mit vorgegebenen Ausstreckungen, insbesondere auch Mindestmetalldicken, umfassen. Entsprechende Zielgrößen können auch von der zweiten Vorrichtung abgefragt oder eine Abfrage durch die erste Vorrichtung ausgelöst werden.

Die Umformrandbedingungen können auch zumindest teilweise die Materialparameter umfassen, womit beispielsweise die erste Vorrichtung bzw. der Abnehmer das Material vorgibt, welche in der durchzuführenden Umformung bzw. den Umformsimulationen Verwendung finden soll.

Gemäß einer nächsten Ausgestaltung umfasst das Verfahren: Ermitteln einer Abhängigkeit von Zielgrößen einerseits und Materialparametern und/oder Prozessparametern andererseits anhand der Umformsimulation oder den Umformsimulationen, wobei das Ermitteln von Messinformationen zudem auf der Abhängigkeit von Zielgrößen und Materialparametern und/oder Prozessparametern basiert. Beispielsweise werden die Material- und/oder Prozessparameter jeweils von einem minimalen bis zu einem maximalen Wert (schrittweise) systematisch variiert und der Einfluss auf die Zielgrößen über eine funktionale Abhängigkeit wiedergegeben. Beispielsweise wird eine Regression mit einer Bestimmung von Koeffizienten durchgeführt. Anhand der funktionalen Abhängigkeit können somit z.B. die auftretenden Schwankungen der Materialparameter auf einfache Weise in den Umformergebnissen berücksichtigt und damit besonders einfach kritische Stellen und/oder Zeitpunkte bestimmt werden.

In einer weiteren Ausgestaltung umfasst das Verfahren: Ermitteln einer funktionalen Abhängigkeit, insbesondere einer Korrelation, zwischen Zielgrößen und/oder Materialparametern und/oder Prozessparametern, wobei das Ermitteln der Messinformationen zudem zumindest teilweise auf der funktionalen Abhängigkeit, insbesondere der Korrelation, zwischen Zielgrößen und/oder Materialparametern und/oder Prozessparametern basiert.

Umformsimulationen können basierend auf zufällig verteilten Werten für Material- und/oder Prozessparameter beispielsweise bestimmt durch eine Verteilung von Material- und/oder Prozessparametern durchgeführt werden. In der Realität hängen verschiedene Material- und/oder Prozessparametern und/oder Zielgrößen jedoch zumindest teilweise kausal voneinander ab oder sind aus anderen Gründen korreliert. Solche funktionalen Abhängigkeiten schränken den zu untersuchenden Parameterraum ein. Durch Berücksichtigung dieser funktionalen Abhängigkeiten kann somit einerseits die Anzahl der Umformsimulationen reduziert werden, um verlässliche Umformergebnisse zu erzielen, und andererseits können in der Realität nicht auftretende Parameterkombinationen ausgeschlossen werden. Derartige in der Realität nicht auftretende Parameterkombinationen können ansonsten beispielsweise zu in der Realität nicht auftretenden Abweichungen von den Zielgrößen führen. Beispielsweise könnten in der Realität nicht auftretenden kritischen Stellen und/oder Zeitpunkten identifiziert werden, in der Realität nicht auftretende Materialbewegungen prognostiziert werden oder in der Realität nicht auftretenden Sensorsignale indikativ für eine bevorstehende Abweichung der Parameter des Metallteils von den Zielgrößen identifiziert werden, beispielsweise Kraft-Weg Beziehungen oder ein Einlaufverhalten des umzuformenden Metallteils in das Werkzeug. Dies kann letztlich zu ungenauen oder sogar falschen Messinformationen führen. Die Berücksichtigung funktionaler Abhängigkeiten, insbesondere Korrelationen, zwischen Zielgrößen und/oder Materialparametern und/oder Prozessparametern kann somit einerseits zu einer Reduzierung der zur Regelung oder Steuerung des Herstellungsprozesses notwendigen Prozessüberwachung und andererseits zu verlässlichen Messinformationen führen.

Daten zu solchen Abhängigkeiten, insbesondere zu solchen Korrelationen sind in der Regel nur eingeschränkt verfügbar. Sie können in Experimenten oder im Vergleich zwischen Experimenten und Umformsimulationen ermittelt werden. Daher stehen sie in der Regel nur den Herstellern von Halbzeugen bzw. von Grundmaterialien nicht aber den Abnehmern zur Verfügung.

In einer weiteren Ausgestaltung umfasst das Verfahren: Ermitteln von Messinformationen, insbesondere Messgrößeninformationen und/oder Messpositionsinformationen indikativ für Abweichungen von Umformergebnissen, zumindest teilweise auf der mindestens einen Umformsimulation basierend, von den Zielgrößen an anderen Positionen als durch die Messpositionsinformationen indizierten Positionen eines zu fertigenden Metallteils.

Es ist bauart- und prozessbedingt nicht immer möglich, jede Stelle, insbesondere jede kritische Stelle eines Metallteils zu jedem Zeitpunkt einer Umformung zu überwachen. Durch die Durchführung einer Umformsimulation ist es jedoch möglich, insbesondere quantitative oder qualitative Zusammenhänge zwischen den Änderungen von Messgrößen an einer Stelle oder zu einem Zeitpunkt an dem eine Messung in der Realität möglich ist und den Änderungen derselben oder einer anderen Messgröße an einer anderen, insbesondere kritischen Stelle und/oder zu einem kritischen Zeitpunkt abzuleiten. Somit können verbesserte Messinformationen ermittelt werden, die eine beispielsweise effizientere Überwachung und Regelung oder Steuerung des Umformprozesses ermöglichen, sodass die Herstellung von fehlerhaften Bauteilen vermieden werden kann.

Beschrieben ist auch ein Verfahren zum Erhalten von Messinformationen für eine durchzuführende Umformung eines Metallteils, insbesondere für die Stahl- oder Aluminiumumformung, das Verfahren durchgeführt durch zumindest eine erste Vorrichtung gelöst, wobei das Verfahren umfasst: Bereitstellen von Umformrandbedingungen durch die erste Vorrichtung an eine zweite Vorrichtung; Erhalten von der zweiten Vorrichtung bereitgestellten Messinformationen an der ersten Vorrichtung, wobei die Messinformationen zumindest teilweise auf mindestens einer Umformsimulation basieren, welche zumindest teilweise auf den Umformrandbedingungen und auf Materialparametern des Metallteils und/oder Prozessparametern der durchzuführenden Umformung basiert.

In einer Ausgestaltung basieren die Messinformationen zumindest teilweise auf mindestens einer Umformsimulation, welche zumindest teilweise auf den Umformrandbedingungen und auf einer Verteilung von Materialparametern des Metallteils und/oder Prozessparametern der durchzuführenden Umformung basiert.

In einer weiteren Ausgestaltung kann die zumindest eine erste Vorrichtung weiterhin eine Umformvorrichtung umfassen, und das Verfahren umfasst weiterhin: Ermitteln von Messergebnissen mittels eines Sensors oder mehrerer Sensoren, wobei beispielsweise die Sensoren real oder virtuell ausgeführt sein können, welche basierend auf den Messinformationen ausgewählt und/oder positioniert sind;
Umformen eines Metallteils unter Berücksichtigung der Messergebnisse.

Insbesondere ist die erste Vorrichtung dazu eingerichtet, ein Metallteil umzuformen oder die Umformung eines Metallteiles virtuell zu prognostizieren und insbesondere eine Umformung, insbesondere real oder virtuell, entsprechend den Umformrandbedingungen durchzuführen. Insbesondere kann die Umformvorrichtung real oder virtuell ausgeführt sein.

Unter einem Messergebnis wird hierbei das Ergebnis einer Messung einer Messgröße verstanden. Beispielsweise kann entsprechend der Messinformationen ein (realer oder virtueller) Sensor vorgesehen sein, der das Einlaufverhalten des umzuformenden Metallteils in das Werkzeug misst. Misst dieser Sensor ein Messergebnis, das beispielsweise höher oder geringer als ein anhand der Umformergebnisse bestimmter kritischer Wert für diese Messgröße ist, wobei es von dem kritischen Wert anhängt, ob es beispielsweise zu Reißer oder Oberflächendehnungen komme kann, kann beispielsweise die Pressenkraft verringert werden, um das Entstehen eines fehlerhaften Metallteils zu verhindern.

In einer nächsten Ausgestaltung umfasst das Verfahren: Durchführen und/oder Auslösen des Durchführens einer oder mehrerer Umformsimulationen basierend auf den Umformrandbedingungen und den Messinformationen; Ermitteln von Umformergebnissen indikativ für eine zu erwartende Prozesssicherheit.

Beispielsweise werden eine oder mehrere Umformsimulationen durchgeführt, wobei die vorher ermittelten Messinformationen berücksichtigt werden. Somit kann festgestellt werden, ob eine anhand der Messinformationen vorgesehene Regelung oder Steuerung eines Umformprozesses tatsächlich prozesssicher zu einer Verringerung des Ausschusses führt. Auch kann der Einfluss der Messung auf den Umformprozess hinsichtlich der Prozesssicherheit berücksichtigt werden. Sollte festgestellt werden, dass die vorgesehene Regelung oder Steuerung nicht oder nicht ausreichend zu einer Vermeidung der Herstellung fehlerhafter Metallteile bzw. einer Verringerung von Ausschuss führt, können die Messinformationen entsprechend angepasst werden, so können beispielsweise weitere oder andere Sensoren oder Messverfahren vorgesehen werden. Auch diese Messinformationen können dann in einem weiteren Schritt wieder in Umformsimulationen berücksichtigt werden, um auch hierbei Umformergebnissen repräsentativ für eine zu erwartende Prozesssicherheit zu ermitteln.

Die Umformergebnisse können dabei indikativ für eine zu erwartende Prozesssicherheit, eine Robustheit und/oder Sensitivität der Umformung gegenüber Schwankungen der Materialparameter und/oder einer Bewertung hiervon sein. Beispielsweise sind die Umformergebnisse indikativ für eine oder mehrere Wahrscheinlichkeiten, ob beispielsweise Zielgrößen eingehalten und/oder verfehlt werden. Da die Umformsimulationen nicht nur auf Grundlage einzelner Materialparameter, sondern auf Grundlage einer Verteilung von Materialparametern durchgeführt werden können, werden somit dem Abnehmer mit den gewählten Umformrandbedingungen nicht nur einzelne Umformergebnisse zur Verfügung gestellt, sondern eine zu erwartende Prozesssicherheit, Robustheit und/oder Sensitivität unter Einbeziehung der Streuung der Materialkennwerte bereitgestellt.

In einer nächsten Ausgestaltung umfasst das Verfahren: Ermitteln einer Effektivität der Messinformationen; wobei die Effektivität der Messinformationen bei dem Bereitstellen der Messinformationen von der zweiten Vorrichtung an die erste Vorrichtung berücksichtigt wird.

Unter der Effektivität der Messinformationen wird hierbei das Ausmaß und die Qualität verstanden, inwieweit eine Abweichung von den Zielgrößen bei dem umgeformten Metallteil durch Berücksichtigung der Messinformationen beispielsweise zur Festlegung eines Regel- oder Steuerkreises eines Umformprozesses vermieden wird. Es wird somit der Grad bzw. die Qualität der Zielerreichung bestimmt. Beispielsweise kann die Effektivität in Form einer Wahrscheinlichkeit dafür angegeben werden, in wieviel Prozent der Umformungen die Zielgrößen bei einem umgeformten Metallteil eingehalten werden können. Anhand der Effektivtät können dann verschiedene infrage kommende Regel- oder Steuerkreise, d. h. insbesondere verschiede, beispielsweise alternative Sätze von Messinformationen gewichtet werden und somit ein möglichst optimaler Regel- oder Steuerkreis ermittelt werden. Beispielsweise kann somit entschieden werden, ob etwa ein Einlaufsensor vorgesehen werden soll oder eine Kraftmessung erfolgen soll oder ob überhaupt die Einrichtung einer Messinformation unter Kostenaspekten sinnvoll ist.

In einer Ausgestaltung wird das Bereitstellen der Umformrandbedingungen über eine gesicherte Verbindung durchgeführt. Beispielsweise wird ein Bereitstellen bzw. ein Übermitteln von Umformrandbedingungen kodiert bzw. verschlüsselt. Ebenso kann auch eine weitere Kommunikation zwischen der ersten und zweiten Vorrichtung über eine gesicherte Verbindung durchgeführt werden, insbesondere wenn die Umformergebnisse an die erste Vorrichtung ausgegeben werden.

Gemäß einer zweiten Lehre wird die oben genannte Aufgabe bezüglich einer Vorrichtung gelöst, welche dazu eingerichtet ist oder entsprechende Mittel umfasst, ein Verfahren nach einem der vorhergehenden Ansprüche durchzuführen und/oder zu steuern. Eine solche Vorrichtung ist oder umfasst beispielsweise eine erste Vorrichtung und/oder eine zweite Vorrichtung.

Gemäß der zweiten Lehre der Erfindung wird auch eine Vorrichtung beschrieben, umfassend zumindest einen Prozessor und zumindest einen Speicher mit Computerprogrammcode, wobei der zumindest eine Speicher und der Computerprogrammcode dazu eingerichtet sind, mit dem zumindest einen Prozessor zumindest ein Verfahren gemäß der ersten und/oder zweiten Lehre auszuführen und/oder zu steuern. Unter einem Prozessor soll zum Beispiel eine Kontrolleinheit, ein Mikroprozessor, eine Mikrokontrolleinheit wie ein Mikrocontroller, ein digitaler Signalprozessor (DSP), eine anwendungsspezifische Integrierte Schaltung (ASIC) oder ein Field Programmable Gate Arrays (FPGA) verstanden werden.

Zum Beispiel umfasst eine beispielhafte Vorrichtung ferner Mittel zum Speichern von Informationen wie einen Programmspeicher und/oder einen Hauptspeicher. Zum Beispiel umfasst eine beispielhafte erfindungsgemäße Vorrichtung ferner jeweils Mittel zum Empfangen und/oder Senden von Informationen über ein Netzwerk wie eine Netzwerkschnittstelle. Zum Beispiel sind beispielhafte erfindungsgemäße Vorrichtungen über ein oder mehrere Netzwerke miteinander verbunden und/oder verbindbar.

Eine beispielhafte Vorrichtung gemäß der zweiten Lehre ist oder umfasst etwa eine Datenverarbeitungsanlage, die softwaremäßig und/oder hardwaremäßig eingerichtet ist, um die jeweiligen Schritte eines beispielhaften Verfahrens gemäß der ersten Lehre und/oder Verfahren zum Erhalten von Messinformationen ausführen zu können. Beispiele für eine Datenverarbeitungsanlage sind ein Computer, ein Desktop-Computer, ein Server, eine Serverfarm, eine Cloud, ein Thinclient und/oder ein tragbarer Computer (Mobilgerät), wie etwa ein Laptop-Computer, ein Tablet-Computer, ein Wearable, ein persönlicher digitaler Assistent oder ein Smartphone. Eine Datenverarbeitungsanlage kann auch in virtueller Form ausgestaltet sein und beispielhaft auf einer realen Datenverarbeitungsanlage laufen (Docker).

Das heißt insbesondere, dass einzelne Verfahrensschritte des Verfahrens gemäß der ersten Lehre und/oder Verfahren zum Erhalten von Messinformationen (beispielsweise das Erhalten und/oder Bereitstellen von Umformrandbedingungen, Ermitteln einer Verteilung von Materialparametern, das Ermitteln und/oder Bereitstellen von Messinformationen, das Durchführen und/oder Auslösen des Durchführens mindestens einer Umformsimulation, das Ermitteln von Umformergebnissen) hierbei mit einer zweiten Vorrichtung durchgeführt werden können. Ebenso können einzelne Verfahrensschritte (beispielsweise das Erhalten und/oder Bereitstellen von Umformrandbedingungen, das Ermitteln und/oder Bereitstellen von Messinformationen, das Ermitteln einer Verteilung von Materialparametern, das Durchführen und/oder Auslösen des Durchführens mindestens einer Umformsimulation, das Ermitteln von Umformergebnissen), von einer weiteren Vorrichtung vorgenommen werden. Eine solche weitere (dritte) Vorrichtung kann beispielswiese ein Server sein und beispielsweise ein Teil bzw. eine Komponente einer sogenannten Computer Cloud sein, welche Datenverarbeitungsressourcen dynamisch für verschiedene Nutzer in einem Kommunikationssystem bereitstellt. Unter einer Computer Cloud wird insbesondere eine Datenverarbeitungs-Infrastruktur gemäß der Definition des "National Institute for Standards and Technology" (NIST) für den englischen Begriff "Cloud Computing" verstanden. Ein Beispiel einer Computer Cloud ist eine Microsoft Windows Azure Platform.

Gemäß der zweiten Lehre der Erfindung wird auch ein Computerprogramm beschrieben, das Programmanweisungen umfasst, die einen Prozessor zur Ausführung und/oder Steuerung eines Verfahrens gemäß der ersten Lehre und/oder Verfahren zum Erhalten von Messinformationen veranlassen, wenn das Computerprogramm auf dem Prozessor läuft. Ein beispielhaftes Programm gemäß der Erfindung kann in oder auf einem computerlesbaren Speichermedium gespeichert sein, welches eines oder mehrere Programme enthält.

Gemäß der zweiten Lehre der Erfindung wird auch ein computerlesbares Speichermedium beschrieben, welches ein Computerprogramm gemäß der zweiten Lehre enthält. Ein computerlesbares Speichermedium kann z.B. als magnetisches, elektrisches, elektro-magnetisches, optisches und/oder andersartiges Speichermedium ausgebildet sein. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nicht-flüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Gemäß einer dritten Lehre der Erfindung wird auch ein System beschrieben, umfassend mehrere Vorrichtungen, insbesondere umfassend eine Vorrichtung gemäß der zweiten Lehre, welche zusammen ein Verfahren gemäß der ersten Lehre und/oder Verfahren zum Erhalten von Messinformationen durchführen. Das System umfasst insbesondere eine Vorrichtung, welche ein Verfahren gemäß der ersten Lehre und eine Vorrichtung, welche ein Verfahren zum Erhalten von Messinformationen durchführt.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Lehren offenbart verstanden werden. Die Ausgestaltungen von Verfahrensmerkmalen sollen soweit anwendbar mögliche Ausgestaltungen sowohl des Verfahrens gemäß der ersten Lehre als auch des Verfahrens zum Erhalten von Messinformationen betreffen. Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: ein Diagramm eines Verfahrens gemäß der ersten Lehre,
- Fig. 2: ein Diagramm eines Verfahrens zum Erhalten von Messinformationen,
- Fig. 3: eine schematische Darstellung einer Vorrichtung gemäß der zweiten Lehre und eines System gemäß der dritten Lehre,
- Fig. 4: ein Blockdiagramm eines Ausführungsbeispiels einer Vorrichtung und
- Fig. 5: unterschiedliche Ausführungsbeispiele eines Speichermediums.

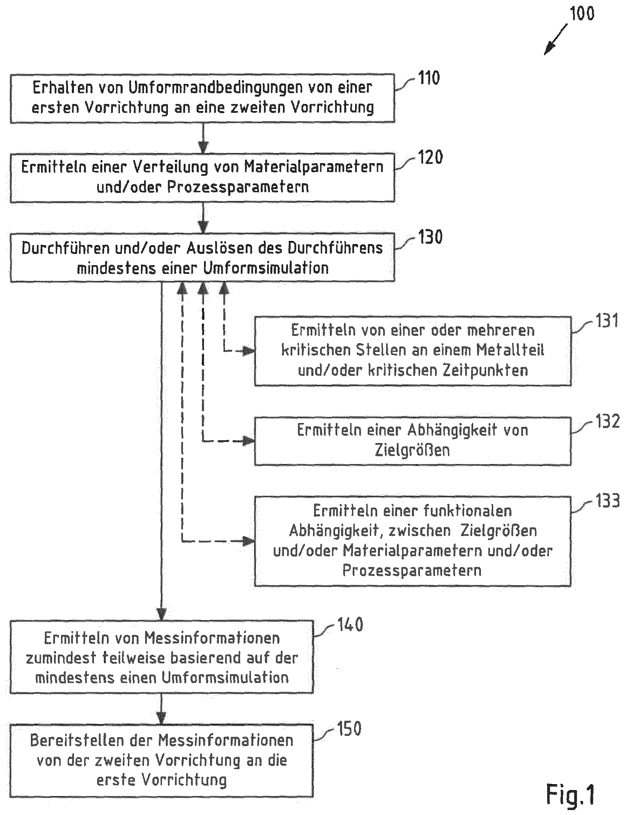

Fig. 1 zeigt ein Diagramm eines Verfahrens 100 zur Ermittlung von Messinformationen einer durchzuführenden Umformung von Metallteilen, insbesondere für die Stahl- oder Aluminiumumformung, welches durch zumindest eine zweite Vorrichtung durchgeführt wird.

In Aktion 110 werden Umformrandbedingungen von einer ersten Vorrichtung an der zweiten Vorrichtung erhalten. Umformrandbedingungen umfassen beispielsweise geometrische Bedingungen wie Ausgangsgeometrie und/oder Zielgeometrie der Umformung, Information repräsentativ für eines oder mehrere Materialien für die Umformung, beispielsweise der Typ des Materials, beispielsweise eine Stahlsorte, etwa gemäß DIN EN 10027, oder eine Aluminiumsorte, etwa gemäß der DIN EN 573, oder eine Werkstoffnummer, eine chemische Zusammensetzung und/oder eine mechanische und/oder thermische Vorbehandlung, Material- und/oder Prozessparameter wie Umformgeschwindigkeit, Kräfte, Druck und Temperatur sowie die Reibungsbedingungen zwischen Metallteil und Umformwerkzeug unter Angabe von Art, Menge und Verteilung eines Schmieröls, und/oder als Reibbeiwertzahl und/oder als Reibmodell. Beispielsweise kann ein Abnehmer die Umformrandbedingungen für eine zu untersuchende Umformung mittels der ersten Vorrichtung übermitteln. Die Umformrandbedingungen werden seitens des Herstellers über die zweite Vorrichtung entgegengenommen.

In Aktion 120 wird eine Verteilung von Materialparametern des Metallteils und/oder Prozessparametern der durchzuführenden Umformung durch die zweite Vorrichtung ermittelt. Beispielsweise verfügt die zweite Vorrichtung über eine Datenbank oder hat Zugriff auf eine Datenbank, welche dafür eingerichtet ist, Verteilungen von Material- und/oder Prozessparametern bereitzustellen. Hierbei wird eine Verteilung von Materialparametern des umzuformenden Metallteils und/oder eine Verteilung von Prozessparametern der durchzuführenden Umformung ermittelt, wobei die Verteilung die Schwankungen der Materialparameter beispielsweise aufgrund von Variationen im Herstellungsverfahren und/oder Schwankungen in der chemischen Zusammensetzung umfasst. Beispielsweise umfasst die Verteilung von Materialparametern eine Verteilung der möglichen Werte für die Dehngrenze R_{p0,2}, Zugfestigkeit Rₘ, *n*-Wert und *r*-Wert sowie mögliche Korrelationen zwischen diesen Werten für die Materialklasse. Eine solche Verteilung kann beispielsweise durch Versuchsreihen an Materialproben ermittelt werden, wobei die Verteilung der Materialparameter Schwankungen in der chemischen Zusammensetzung und der Herstellung abbildet. Beispielsweise umfasst die Verteilung von Prozessparametern eine Verteilung der möglichen Werte für Umformgeschwindigkeit, Kräfte, Druck und Temperatur und/oder die Reibungsbedingungen.

In Aktion 130 erfolgt ein Durchführen und/oder Auslösen des Durchführens mindestens einer Umformsimulation basierend auf den Umformrandbedingungen und der Verteilung von Materialparametern durch die zweite Vorrichtung. Hierbei löst die zweite Vorrichtung eine Reihe von Umformsimulationen auf Grundlage der Umformrandbedingungen und einer vorgegebenen Variation von Materialparametern aus deren Verteilung aus.

Beispielsweise wird eine Reihe von Umformsimulationen auf Grundlage aller möglichen Kombinationen der Minimal-, Maximal- und Mittelwerte von Dehngrenze R_{p0,2}, Zugfestigkeit Rₘ, Reibung, *n*-Wert und *r*-Wert vorgenommen. Hierfür ist eine entsprechend große Anzahl von Umformsimulationen notwendig.

Mit der optionalen Aktion 131 können ein oder mehrere kritische Stellen an einem Metallteil und/oder einer oder mehreren kritische Zeitpunkte während der Umformung ermittelt werden. Kritische Stellen können beispielsweise eine Position oder ein Bereich auf einem Metallteil sein, an denen mit erhöhter Wahrscheinlichkeit Fehler während der Umformung auftreten, die zu Abweichungen von den Zielgrößen führen können. Beispielsweise können diese in empfindlichen oder stark umgeformten Bereichen eines Metallteils auftreten, beispielsweise an Kanten oder in dünnen Bereichen mit geringer Wandstärke. Kritische Zeitpunkte können Zeitpunkte während einer Umformung sein, zu denen Fehler auftreten, die zu Abweichungen von den Zielgrößen führen können. Beispielsweise kann dies ein Zeitpunkt maximaler Werkzeuggeschwindigkeit sein.

Mit Aktion 132 kann mit einer vorgegebenen Variation aus der Verteilung von Materialparametern ein Bestimmen einer funktionalen Abhängigkeit von Zielgrößen und Materialparametern erfolgen. Zielgrößen können eine Rissgefahr, eine Gewichtung bestimmter Bereiche der Ausgangs- und/oder Zielgeometrie, Sicherheiten gegenüber Einschnürungen und/oder Bereiche mit vorgegebenen Ausstreckungen umfassen. Die funktionale Abhängigkeit kann über eine Regression bestimmt werden.

In Aktion 133 kann eine funktionale Abhängigkeit zwischen Zielgrößen und/oder Materialparametern und/oder Prozessparametern ermittelt werden. Insbesondere kann eine Korrelation zwischen Zielgrößen und/oder Materialparametern und/oder Prozessparametern ermittelt werden. Zwar können Umformsimulationen mit unkorrelierten Zielgrößen und/oder Materialparametern und/oder Prozessparametern durchgeführt werden, indem für die Umformsimulationen die Material- und/oder Prozessparameter beliebig innerhalb der jeweiligen beispielsweise statistischen Verteilung gewählt werden. Allerdings können sich dann aus den Umformsimulationen ungenaue oder falsche Messinformationen ergeben, beispielsweise könnten kritische Stellen ermittelt werden, die in der Realität nicht auftreten. Auch könnten Werkstoffbewegungen ermittelt werden, die zwar theoretisch mit einem Sensor messbar wären, in der Praxis aber nicht auftreten. Zudem könnten Signale vom Prozess oder der Geometrie der Bauteile, beispielsweise Kraft-Weg Beziehungen, Einlaufverhalten eines Blechs in das Werkzeug, ermittelt werden, die es in der Realität nicht gibt. Diese Merkmale wären zwar mittels Sensoren messbar und stellen somit eigentlich geeignete Messinformationen dar, da sie jedoch in der Realität nicht auftreten, ist auf ihrer Grundlage eine Regelung oder Steuerung des Umformprozesses nicht möglich. Durch die Berücksichtigung der Korrelationen werden insbesondere also realistischere Umformergebnisse und Messinformationen ermittelt.

Kann nun beispielsweise an einer ermittelten kritischen Stelle nicht direkt mittels eines Sensors gemessen werden oder diese kritische Stelle nicht direkt im Umformprozess beeinflusst werden, beispielsweise aufgrund fehlender Zugänglichkeit, wird eine andere Stelle und/oder eine andere Messgröße mittels eines Sensors gemessen. Hierzu werden Messinformationen ermittelt, insbesondere Messgrößeninformation und/oder Messpositionsinformation indikativ für Abweichungen von Umformergebnissen, zumindest teilweise auf der mindestens einen Umformsimulation basierend, von den Zielgrößen an anderen Positionen als durch die Messpositionsinformation indizierten Positionen eines zu fertigenden Metallteils. Insbesondere wird hierzu eine weitere Korrelation ermittelt. Wenn also eine kritische Stelle identifiziert ist, beispielsweise eine Stelle an der möglicherweise ein Riss entsteht, kann anhand der Umformergebnisse analysiert werden, an welcher Stelle am Metallteil oder im Prozess erkannt werden kann, dass an der kritischen Stelle eine signifikante Abweichung von den Zielgrößen auftritt bzw. auftreten wird. Nun kann noch ermittelt werden, welcher Sensor zur Messung an dieser anderen Position eingesetzt werden kann und ob die Position mit dem Werkzeugbau in Einklang gebracht werden kann. Ebenso kann noch ermittelt werden, welche Prozessparameter diese kritische Stelle so beeinflussen, dass sich deren Veränderung positiv auf die Bauteilherstellung auswirkt. Die so ermittelten Messinformationen ermöglicht die gezielte Überwachung und Regelung oder Steuerung eines Umformprozesses, um prozesssicher die Herstellung von fehlerhaften Metallteilen zu vermeiden.

Zudem kann eine Effektivität der Messinformationen ermittelt werden. Es kann beispielsweise ermittelt werden, welche Messgröße (beispielsweise ein Materialeinlauf, Prozesskräfte zu einem bestimmten Zeitpunkt und/oder eine Kraft auf einen Radius) an welcher Stelle des Metallteils bzw. an welchen Zeitpunkt im Umformprozess eine optimale Regelung oder Steuerung der Umformung zulässt, beispielsweise durch Veränderung von Prozessparametern, etwa Niederhalterkraft und/oder Verstellung einer Ziehleiste.

Messinformationen, welche zumindest teilweise auf der mindestens einen Umformsimulation basieren, werden in Aktion 140 durch die zweite Vorrichtung ermittelt und in Aktion 150 von der zweiten Vorrichtung an die erste Vorrichtung bereitgestellt.

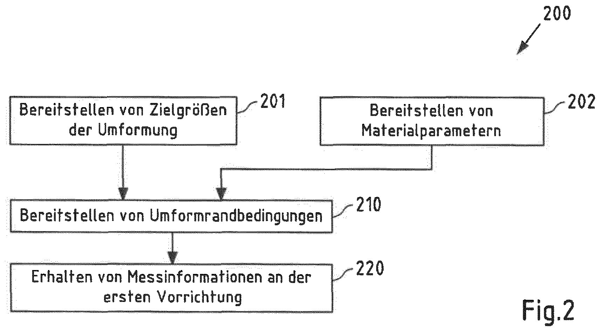

Fig. 2 zeigt ein Diagramm eines Verfahrens 200 zum Erhalten von Messinformationen für eine durchzuführende Umformung eines Metallteils, insbesondere für die Stahl- oder Aluminiumumformung. Das Verfahren 200 wird durchgeführt durch zumindest eine erste Vorrichtung 302. Die erste Vorrichtung 302 stellt Umformrandbedingungen in Aktion 210 an die zweite Vorrichtung 304 bereit. Die Umformrandbedingungen können optional Zielgrößen und/oder Materialparameter umfassen. Entsprechend können mit Aktion 201 Zielgrößen bzw. mit Aktion 202 Materialparameter bereitgestellt werden. In Aktion 220 werden an der ersten Vorrichtung 302 die von der zweiten Vorrichtung 304 bereitgestellten Messinformationen erhalten, welche zumindest teilweise auf den Umformrandbedingungen und auf Materialparametern des Metallteils und/oder Prozessparametern der durchzuführenden Umformung basiert.

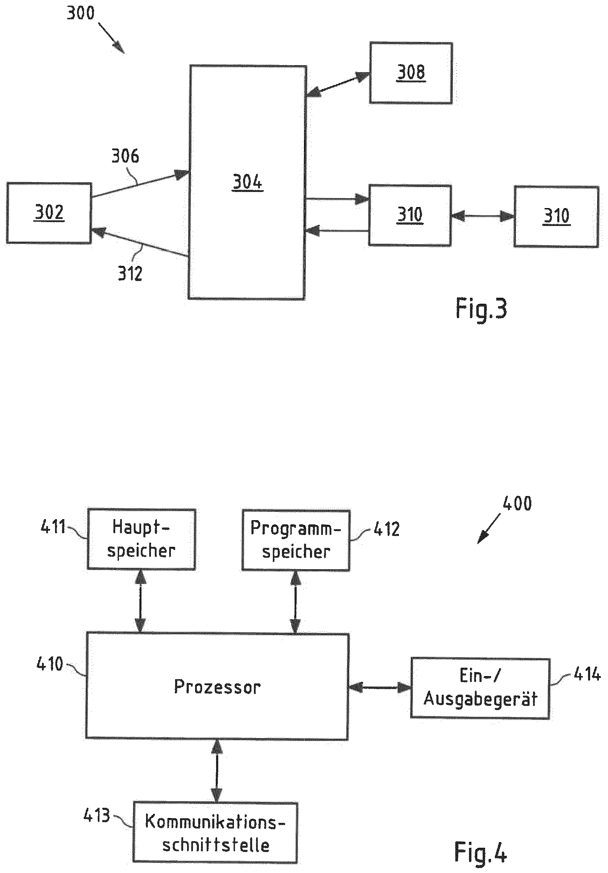

Fig. 3 zeigt eine schematische Darstellung eines Systems 300 gemäß der dritten Lehre, wobei das System 300 eine erste Vorrichtung 302, welche einem Abnehmer zugeordnet ist, und eine zweite Vorrichtung 304 umfasst, welche einem Hersteller zugeordnet ist.

Der Abnehmer kann mittels der ersten Vorrichtung 302 Umformrandbedingungen bereitstellen und diese einer Übermittlung 306 an die zweite Vorrichtung 304 zuführen, wobei die Übermittlung 306 gesichert ist. Die zweite Vorrichtung 304 kann eine Verteilung von Materialparametern aus einer Datenbank 308 abfragen, auf welche beispielsweise nur der Hersteller Zugriff hat. Die zweite Vorrichtung 304 kann eine Durchführung von Umformsimulationen auf Grundlage der Umformrandbedingungen und der Verteilung von Materialparametern auf einem System 310 von dritten Vorrichtungen auslösen, welche beispielsweise Rechenkapazitäten für Umformsimulationen bereitstellen. Messinformationen werden bereitgestellt, wobei eine Übermittlung 312 der Messinformationen an die erste Vorrichtung 302 stattfinden kann. Die zumindest eine erste Vorrichtung umfasst insbesondere weiterhin eine Umformvorrichtung (nicht gezeigt), wobei ein Umformen eines Metallteils unter Berücksichtigung der Umformergebnisse durchgeführt werden kann.

Fig. 4 zeigt ein Blockdiagramm eines Ausführungsbeispiels einer Vorrichtung 400, welche insbesondere ein beispielhaftes Verfahren gemäß der ersten Lehre und/oder Verfahren zum Erhalten von Messinformationen ausführen kann. Die Vorrichtung 400 ist beispielsweise eine Vorrichtung gemäß der zweiten Lehre oder ein System gemäß der dritten Lehre.

Die Vorrichtung 400 kann insofern beispielsweise ein Computer, ein Desktop-Computer, ein Server, eine Serverfarm, eine Cloud, ein Thinclient oder ein tragbarer Computer (Mobilgerät), wie etwa ein Laptop-Computer, ein Tablet-Computer, ein persönlicher digitaler Assistent (PDA) oder ein Smartphone sein. Die Vorrichtung kann beispielsweise die Funktion eines Servers oder eines Clients erfüllen.

Prozessor 410 der Vorrichtung 400 ist insbesondere als Mikroprozessor, Mikrokontrolleinheit, Mikrocontroller, digitaler Signalprozessor (DSP), Anwendungsspezifische Integrierte Schaltung (ASIC) oder Field Programmable Gate Array (FPGA) ausgebildet.

Prozessor 410 führt Programmanweisungen aus, die in Programmspeicher 412 gespeichert sind, und speichert beispielsweise Zwischenergebnisse oder ähnliches in Arbeits- oder Hauptspeicher 411. Zum Beispiel ist Programmspeicher 412 ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Hauptspeicher 411 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Programmspeicher 412 ist vorzugsweise ein lokaler mit der Vorrichtung 400 fest verbundener Datenträger. Mit der Vorrichtung 400 fest verbundene Datenträger sind beispielsweise Festplatten, die in die Vorrichtung 400 eingebaut sind. Alternativ kann der Datenträger beispielsweise auch ein mit der Vorrichtung 400 trennbar verbindbarer Datenträger sein wie ein Speicher-Stick, ein Wechseldatenträger, eine tragbare Festplatte, eine CD, eine DVD und/oder eine Diskette.

Programmspeicher 412 enthält beispielsweise das Betriebssystem von der Vorrichtung 400, das beim Starten der Vorrichtung 400 zumindest teilweise in Hauptspeicher 411 geladen und vom Prozessor 410 ausgeführt wird. Insbesondere wird beim Starten von Vorrichtung 400 zumindest ein Teil des Kerns des Betriebssystems in den Hauptspeicher 411 geladen und von Prozessor 410 ausgeführt. Das Betriebssystem von Vorrichtung 400 ist beispielsweise ein Windows -, UNIX-, Linux-, Android-, Apple iOS- und/oder MAC-Betriebssystem.

Das Betriebssystem ermöglicht insbesondere die Verwendung der Vorrichtung 400 zur Datenverarbeitung. Es verwaltet beispielsweise Betriebsmittel wie Hauptspeicher 411 und Programmspeicher 412, Netzwerkschnittstelle 413, Ein- und Ausgabegerät 414, stellt unter anderem durch Programmierschnittstellen anderen Programmen grundlegende Funktionen zur Verfügung und steuert die Ausführung von Programmen.

Prozessor 410 steuert die Kommunikationsschnittstelle 413, welche beispielsweise eine Netzwerkschnittstelle sein kann und als Netzwerkkarte, Netzwerkmodul und/oder Modem ausgebildet sein kann. Die Kommunikationsschnittstelle 413 ist insbesondere dazu eingerichtet, eine Verbindung der Vorrichtung 400 mit anderen Vorrichtungen, insbesondere über ein (drahtloses) Kommunikationssystem, beispielsweise ein Netzwerk, herzustellen und mit diesen zu kommunizieren. Die Kommunikationsschnittstelle 413 kann beispielsweise Daten (über das Kommunikationssystem) empfangen und an Prozessor 410 weiterleiten und/oder Daten von Prozessor 410 empfangen und (über das Kommunikationssystem) senden. Beispiele für ein Kommunikationssystem sind ein lokales Netzwerk (LAN), ein großräumiges Netzwerk (WAN), ein drahtloses Netzwerk (beispielsweise gemäß dem IEEE-802.11-Standard, dem Bluetooth (LE)-Standard und/oder dem NFC-Standard), ein drahtgebundenes Netzwerk, ein Mobilfunknetzwerk, ein Telefonnetzwerk und/oder das Internet.

Des Weiteren kann Prozessor 410 zumindest ein Ein-/Ausgabegerät 414 steuern. Ein-/Ausgabegerät 414 ist beispielsweise eine Tastatur, eine Maus, eine Anzeigeeinheit, ein Mikrofon, eine berührungsempfindliche Anzeigeeinheit, ein Lautsprecher, ein Lesegerät, ein Laufwerk und/oder eine Kamera. Ein-/Ausgabegerät 414 kann beispielsweise Eingaben eines Benutzers aufnehmen und an Prozessor 410 weiterleiten und/oder Informationen für den Benutzer von Prozessor 410 empfangen und ausgeben.

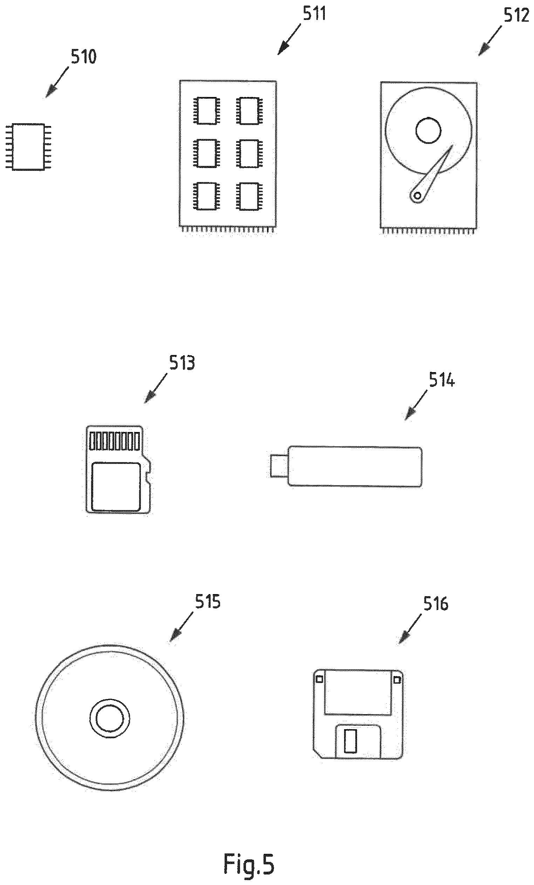

Fig.5 zeigt schließlich unterschiedliche Ausführungsbeispiele von Speichermedien, auf denen ein Ausführungsbeispiel eines erfindungsgemäßen Computerprogrammes gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessor 410 der Fig. 4) sein, beispielsweise ein (nicht-flüchtiger oder flüchtiger) Programmspeicher des Prozessors oder ein Teil davon (wie Programmspeicher 412 in Fig. 4).

Ausführungsbeispiele eines Speichermediums sind ein Flash-Speicher 510, eine SSD-Festplatte 511, eine magnetische Festplatte 512, eine Speicherkarte 513, ein Memory Stick 514 (z.B. ein USB-Stick), eine CD-ROM oder DVD 515 oder eine Diskette 516.

## Patentansprüche

1. Verfahren zur Ermittlung von Messinformationen für eine durchzuführende Umformung eines Metallteils, insbesondere für die Stahl- oder Aluminiumumformung, das Verfahren durchgeführt durch zumindest eine zweite Vorrichtung (304), wobei das Verfahren folgendes umfasst:
- Erhalten (110) von Umformrandbedingungen der durchzuführenden Umformung von einer ersten Vorrichtung (302) an der zweiten Vorrichtung (304);
- Erhalten und/oder Ermitteln von Materialparametern des Metallteils und/oder Prozessparametern der durchzuführenden Umformung;
- Durchführen und/oder Auslösen des Durchführens (150) mindestens einer Umformsimulation basierend auf den Umformrandbedingungen und den Materialparametern und/oder Prozessparametern; weiter **gekennzeichnet durch**
- Ermitteln (140) von Messinformationen zumindest teilweise basierend auf der mindestens einen Umformsimulation, wobei die Messinformationen
- Messgrößeninformationen indikativ für eine oder mehrere bei der durchzuführenden Umformung zu bestimmende Messgrößen umfassen und/oder
- Messpositionsinformationen indikativ für eine oder mehrere Positionen eines oder mehrerer bei der durchzuführenden Umformung zu verwendenden Sensoren umfassen und/oder
- angeben, welche Art der Erfassung zu verwenden ist, und/oder
- einen prognostizierten Zeitpunkt angeben, zu dem eine bestimmte Messung zu erfolgen hat; und
- Bereitstellen (150) der Messinformationen von der zweiten Vorrichtung an die erste Vorrichtung.

2. Verfahren nach Anspruch 1, umfassend:
- Erhalten und/oder Ermitteln (120) einer Verteilung von Materialparametern des Metallteils und/oder Prozessparametern der durchzuführenden Umformung,
- wobei das Durchführen und/oder Auslösen des Durchführens der mindestens einer Umformsimulation auf den Umformrandbedingungen und der Verteilung von Materialparametern und/oder Prozessparametern basiert.

3. Verfahren nach Anspruch 1 oder 2, umfassend:
- Ermitteln (131) von einer oder mehreren kritischen Stellen an einem Metallteil und/oder einer oder mehreren kritischen Zeitpunkten während der durchzuführenden Umformung, wobei das Ermitteln von Messinformationen zudem auf der einen oder den mehreren ermittelten kritischen Stellen und/oder dem einen oder den mehreren kritischen Zeitpunkten basiert.

4. Verfahren nach einem der Ansprüche 1 bis 3, wobei die Umformrandbedingungen zumindest teilweise die Zielgrößen der Umformung umfassen, umfassend:
- Ermitteln (152) einer Abhängigkeit von Zielgrößen einerseits und Materialparametern und/oder Prozessparametern andererseits anhand der Umformsimulation oder den Umformsimulationen,
wobei das Ermitteln von Messinformationen zudem auf der Abhängigkeit von Zielgrö-ßen und Materialparametern und/oder Prozessparametern basiert.

5. Verfahren nach Anspruch 4, umfassend:
- Ermitteln (133) einer funktionalen Abhängigkeit, insbesondere einer Korrelation, zwischen Zielgrößen und/oder Materialparametern und/oder Prozessparametern,
wobei das Ermitteln der Messinformationen zudem zumindest teilweise auf der funktionalen Abhängigkeit, insbesondere der Korrelation, zwischen Zielgrößen und/oder Materialparametern und/oder Prozessparametern basiert.

6. Verfahren nach Anspruch 4 oder 5, umfassend:
- Ermitteln von Messinformationen, insbesondere Messgrößeninformationen und/oder Messpositionsinformationen indikativ für Abweichungen von Umformergebnissen, zumindest teilweise auf der mindestens einen Umformsimulation basierend, von den Zielgrößen an anderen Positionen als durch die Messpositionsinformation indizierten Positionen eines zu fertigenden Metallteils.

7. Verfahren nach einem der Ansprüche 1 bis 6,
- Durchführen und/oder Auslösen des Durchführens einer oder mehrerer Umformsimulationen basierend auf den Umformrandbedingungen und den Messinformationen
- Ermitteln von Umformergebnissen indikativ für eine zu erwartende Prozesssicherheit.

8. Verfahren nach einem der Ansprüche 1 bis 7, wobei die Umformrandbedingungen zumindest teilweise die Materialparameter umfassen.

9. Verfahren nach einem der Ansprüche 1 bis 8, umfassend:
- Ermitteln einer Effektivität der Messinformationen;
- wobei die Effektivität der Messinformationen bei dem Bereitstellen der Messinformationen von der zweiten Vorrichtung an die erste Vorrichtung berücksichtigt wird.

10. Vorrichtung, welche dazu eingerichtet ist oder entsprechende Mittel umfasst, ein Verfahren nach einem der vorhergehenden Ansprüche durchzuführen und/oder zu steuern.

11. System, umfassend mehrere Vorrichtungen (302, 304, 310), welche zusammen ein Verfahren nach einem der vorhergehenden Verfahrensansprüche durchführen.

## Claims

1. A method for determining measurement information for a forming operation to be performed on a metal part, in particular for steel or aluminum forming, the method performed by at least a second device (304), the method comprising the following:
- Obtaining (110) forming boundary conditions of the forming to be performed from a first device (302) at the second device (304);
- Obtaining and/or determining material parameters of the metal part and/or process parameters of the forming to be carried out;
- Performing and/or triggering the performance (130) of at least one forming simulation based on the forming boundary conditions and the material parameters and/or process parameters; further **characterized by**
- Determining (140) measurement information at least partly based on the at **least** one forming simulation, wherein the measurement information
- comprise measured variable information indicative of one or more measured variables to be determined during the transformation to be carried out and/or
- comprise measurement position information indicative of one or more positions of one or more sensors to be used in the forming operation to be performed and/or
- specify which type of recording is to be used, and/or
- specify a predicted time at which a particular measurement is to be made; and
- Providing (150) the measurement information from the second device to the first device.

2. A method according to claim 1, comprising:
- Obtaining and/or determining (120) a distribution of material parameters of the metal part and/or process parameters of the forming to be carried out,
- wherein the execution and/or triggering of the execution of the at least one forming simulation is based on the forming boundary conditions and the distribution of material parameters and/or process parameters.

3. A method according to claim 1 or 2, comprising:
- Determining (131) one or more critical locations on a metal part and/or one or more critical times during the forming operation to be performed, wherein the determining of measurement information is further based on the one or more determined critical locations and/or the one or more critical times.

4. The method according to any one of claims 1 to 3, wherein the forming boundary conditions comprise at least partially the target variables of the forming, comprising:
- Determining (132) a dependency of target variables on the one hand and material parameters and/or process parameters on the other hand using the forming simulation or the forming simulations,
whereby the determination of measurement information is also based on the dependence of target variables and material parameters and/or process parameters.

5. A method according to claim 4, comprising:
- Determining (133) a functional dependency, in particular a correlation, between target variables and/or material parameters and/or process parameters,
wherein the determination of the measurement information is also based at least in part on the functional dependence, in particular the correlation, between target variables and/or material parameters and/or process parameters.

6. A method according to claim 4 or 5, comprising:
- Determination of measurement information, in particular measurement variable information and/or measurement position information indicative of deviations of forming results, at least partially based on the at least one forming simulation, from the target variables at positions of a metal part to be manufactured other than positions indicated by the measurement position information.

7. Method according to any one of claims 1 to 6,
- Performing and/or triggering the execution of one or more forming simulations based on the forming boundary conditions and the measurement information
- Determination of forming results indicative of expected process reliability.

8. The method according to any one of claims 1 to 7, wherein the forming boundary conditions comprise at least partially the material parameters.

9. The method according to any one of claims 1 to 8, comprising:
- Determining an effectiveness of the measurement information;
wherein the effectiveness of the measurement information is taken into account when providing the measurement information from the second device to the first device.

10. A device which is set up or comprises corresponding means for carrying out and/or controlling a process according to one of the preceding claims.

11. A system comprising a plurality of devices (302, 304, 310) which together perform a method according to any one of the preceding method claims.

## Revendications

1. Procédé de détermination d'informations de mesure pour un formage à effectuer d'une pièce métallique, en particulier pour le formage de l'acier ou de l'aluminium, le procédé étant mis en oeuvre par au moins un deuxième dispositif (304), le procédé comprenant :
- l'obtention (110) de conditions de bord de formage du formage à effectuer à partir d'un premier dispositif (302) sur le second dispositif (304) ;
- Obtention et/ou détermination de paramètres de matériau de la pièce métallique et/ou de paramètres de processus du formage à effectuer ;
- l'exécution et/ou le déclenchement de l'exécution (130) d'au moins une simulation de formage sur la base des conditions de bord de formage et des paramètres de matériau et/ou des paramètres de processus ; **caractérisé en outre par**
- déterminer (140) des informations de mesure basées au moins en partie sur ladite au moins une simulation de formage, lesdites informations de mesure étant
- comprennent des informations sur les grandeurs de mesure indicatives d'une ou de plusieurs grandeurs de mesure à déterminer lors de la transformation à effectuer et/ou
- comprennent des informations de position de mesure indicatives d'une ou plusieurs positions d'un ou plusieurs capteurs à utiliser dans la déformation à effectuer et/ou
- indiquer le type d'enregistrement à utiliser, et/ou
- indiquer une date prévisionnelle à laquelle une mesure spécifique doit être effectuée ; et
- fournir (150) les informations de mesure du second dispositif au premier dispositif.

2. Procédé selon la revendication 1, comprenant :
- l'obtention et/ou la détermination (120) d'une répartition de paramètres de matériau de la pièce métallique et/ou de paramètres de processus du formage à effectuer,
- dans lequel l'exécution et/ou le déclenchement de l'exécution de ladite au moins une simulation de formage est basée sur les conditions de bord de formage et la distribution de paramètres de matériau et/ou de paramètres de processus.

3. Procédé selon la revendication 1 ou 2, comprenant :
- la détermination (131) d'un ou de plusieurs points critiques sur une pièce métallique et/ou d'un ou de plusieurs moments critiques pendant le formage à effectuer, la détermination d'informations de mesure étant en outre basée sur le ou les points critiques déterminés et/ou le ou les moments critiques.

4. Procédé selon l'une quelconque des revendications 1 à 3, dans lequel les conditions de bord de formage comprennent au moins partiellement les variables cibles du formage, comprenant :
- déterminer (132) une dépendance entre des grandeurs cibles d'une part et des paramètres de matériau et/ou des paramètres de processus d'autre part à l'aide de la simulation de formage ou des simulations de formage,
la détermination d'informations de mesure étant en outre basée sur la dépendance de grandeurs cibles et de paramètres de matériau et/ou de paramètres de processus.

5. Procédé selon la revendication 4, comprenant :
- déterminer (133) une dépendance fonctionnelle, en particulier une corrélation, entre des grandeurs cibles et/ou des paramètres de matériau et/ou des paramètres de processus,
la détermination des informations de mesure étant en outre basée au moins en partie sur la dépendance fonctionnelle, notamment la corrélation, entre des grandeurs cibles et/ou des paramètres de matériau et/ou des paramètres de processus.

6. Procédé selon la revendication 4 ou 5, comprenant :
- détermination d'informations de mesure, en particulier d'informations de grandeurs de mesure et/ou d'informations de positions de mesure indicatives d'écarts de résultats de formage, basés au moins partiellement sur la au moins une simulation de formage, par rapport aux grandeurs cibles dans des positions autres que des positions d'une pièce métallique à fabriquer indiquées par l'information de position de mesure.

7. Procédé selon l'une quelconque des revendications 1 à 6,
- Exécuter et/ou déclencher l'exécution d'une ou plusieurs simulations d e formage sur la base des conditions de bord de formage et des informations de mesure.
- Détermination des résultats de formage à titre indicatif pour une sécurité de processus attendue.

8. Procédé selon l'une quelconque des revendications 1 à 7, dans lequel les conditions de bord de formage comprennent au moins partiellement les paramètres de matériau.

9. Procédé selon l'une quelconque des revendications 1 à 8, comprenant:
- la détermination d'une efficacité des informations de mesure ;
- dans lequel l'efficacité des informations de mesure est prise en compte lors de la fourniture des informations de mesure par le second dispositif au premier dispositif.

10. Dispositif agencé ou comprenant des moyens correspondants pour exécuter et/ou commander un procédé selon l'une des revendications précédentes.

11. Système comprenant une pluralité de dispositifs (302, 304, 310) qui exécutent ensemble un procédé selon l'une quelconque des revendications de procédé précédentes.
